(19) Europäisches Patentamt
European Patent Office
Office européen des brevets

(11) **EP 3 317 324 B1**

(12) **EUROPÄISCHE PATENTSCHRIFT**

(45) Veröffentlichungstag und Bekanntmachung des Hinweises auf die Patenterteilung:
**21.04.2021   Patentblatt 2021/16**

(21) Anmeldenummer: **16728336.5**

(22) Anmeldetag: **13.06.2016**

(51) Int Cl.:
***C08G 71/04*** *(2006.01)*      ***C09J 175/06*** *(2006.01)*

(86) Internationale Anmeldenummer:
**PCT/EP2016/063435**

(87) Internationale Veröffentlichungsnummer:
**WO 2017/001172 (05.01.2017 Gazette 2017/01)**

(54) **ISOCYANATFREIE REAKTIVE POLYURETHANZUSAMMENSETZUNGEN**

ISOCYANATE-FREE REACTIVE POLYURETHANE COMPOSITIONS

COMPOSITIONS DE POLYURETHANE REACTIVES SANS ISOCYANATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2015   EP 15174540**

(43) Veröffentlichungstag der Anmeldung:
**09.05.2018   Patentblatt 2018/19**

(73) Patentinhaber: **Evonik Operations GmbH**
**45128 Essen (DE)**

(72) Erfinder:
• **CRON, Christina**
  **42555 Velbert (DE)**
• **BRENNER, Gabriele**
  **48249 Dülmen (DE)**
• **SCHÄFFNER, Benjamin**
  **46282 Dorsten (DE)**
• **KÖCKRITZ, Angela**
  **12437 Berlin (DE)**

• **DEUTSCH, Jens**
  **15834 Rangsdorf (DE)**
• **NEUBAUER, Katja**
  **18057 Rostock (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 851 379       EP-B1- 2 552 993**
**WO-A1-2014/091173**

• **Xiaojiang Wang: "POLYESTER BASED HYBRID ORGANIC COATINGS", , 30. August 2012 (2012-08-30), Seiten 1-206, XP055225566, Gefunden im Internet: URL:http://rave.ohiolink.edu/etdc/view?acc_num=akron1340906197 [gefunden am 2015-11-03]**

**Beschreibung**

Die vorliegende Erfindung betrifft isocyanatfreie Polyurethanzusammensetzungen für Kleb-, Dicht- und Beschichtungsstoffe.

Polyurethanklebstoffe stellen eine wichtige Klebstoffklasse für viele Anwendungen dar, beispielsweise im Automobilbau, der Möbelfertigung oder der Textilverklebung. Eine besondere Form stellen Schmelzklebstoffe dar. Sie sind bei Raumtemperatur fest und werden durch Erwärmen aufgeschmolzen und bei erhöhter Temperatur in Substanz auf das Substrat aufgebracht. Beim Abkühlen verfestigen sie sich wieder und sorgen so bereits nach kurzer Zeit für eine feste Klebbindung mit hoher Handhabungsfestigkeit. Die Handhabung flüchtiger Lösemittel sowie der Trocknungsschritt zum Abdampfen des Lösungsmittels entfallen. Da in der Regel keine flüchtigen organischen Bestandteile (volatile organic compounds, VOC) eingesetzt werden oder bei der Aushärtung entstehen, erfüllen Schmelzklebstoffe vielfach auch Anforderungen an niedrige Emissionswerte.

Eine Untergruppe der Schmelzklebstoffe sind reaktive Schmelzklebstoffe, die nach dem Auftragen zusätzlich vernetzen und dadurch irreversibel zum Duroplasten aushärten. Im Vergleich zu den nicht vernetzenden, rein physikalisch aushärtenden thermoplastischen Schmelzklebstoffen führt die zusätzliche chemische Aushärtung zu einer höheren Stabilität der Klebverbindung.

Der Klebstoffauftrag kann sowohl ein- als auch zweikomponentig erfolgen. Bei zweikomponentigen Systemen werden die beiden reaktiven Einzelkomponenten erst unmittelbar vor dem Klebstoffauftrag aufgeschmolzen und miteinander gemischt. Bei einkomponentigen Systemen werden die beiden reaktiven Einzelkomponenten vorab gemischt und/oder zur Reaktion gebracht, wobei die Verhältnisse der Reaktionskomponenten so gewählt werden, dass es nicht zur einer Vernetzung kommt. Die Aushärtung wird durch externe Einflussfaktoren gesteuert. Bekannt sind beispielsweise heißhärtende, strahlenhärtende sowie feuchtigkeitshärtende Systeme.

Ein Beispiel für reaktive Polyurethanschmelzklebstoffe sind einkomponentige feuchtigkeitshärtende Schmelzklebstoffe. Hierfür werden funktionelle Gruppen in das Bindemittel eingebracht, die in Gegenwart von Wasser, z. B. Luftfeuchtigkeit, miteinander reagieren. Es kann sich dabei beispielsweise um Isocyanatgruppen handeln. Diese bilden bei der Vernetzung Urethangruppen aus, die aufgrund ihrer Fähigkeit zu Wasserstoffbrückenbindungen für eine gute Substrathaftung und eine hohe Festigkeit des Klebstoffs sorgen.

Bei den einkomponentigen feuchtigkeitshärtenden Polyurethanschmelzklebstoffen handelt es sich in der Regel um isocyanatfunktionalisierte Polymere, die durch Umsetzung von Polyolen bzw. Polyolmischungen mit einem Überschuss an Polyisocyanaten zugänglich sind. Es sind aber auch zweikomponentige Klebstoffaufträge denkbar, bei denen die Polyole und die Polyisocyanate als Einzelkomponenten vorliegen und direkt vordem Klebstoffauftrag vermischt werden.

Die im Stand der Technik bislang beschriebenen reaktiven Polyurethanschmelzklebstoffe auf Basis von Isocyanaten zeigen zwar durchaus gute Klebeigenschaften auf einer Vielzahl von Substraten, bringen jedoch auch Nachteile mit sich. Einerseits sind Isocyanate, insbesondere niedermolekulare, nicht polymergebundene Isocyanate, toxikologisch bedenklich. Das bedeutet, dass bei der Herstellung aufwendige Arbeitssicherheitsmaßnahmen zu treffen sind und eine entsprechende Kennzeichnung des Produkts erforderlich ist. Zudem muss sichergestellt werden, dass während des Klebstoffauftrags und in der Endanwendung die Freisetzung von Isocyanaten in die Atemluft oder durch Migration verhindert wird. Ein weiterer Nachteil betrifft die Hydrolyseempfindlichkeit von Isocyanaten. Daher müssen alle Substanzen vor der Klebstoffherstellung vorgetrocknet werden. Die Herstellung, Lagerung und Auftrag des Klebstoffs muss unter Inertbedingungen unter Ausschluss von Luftfeuchtigkeit erfolgen. Bei einer zu hohen Feuchtigkeit kann es zur Bildung von Blasen durch freigesetztes $CO_2$ kommen, die die Haftung und Transparenz der Klebverbindung stören.

Silanmodifizierte Schmelzklebstoffe werden durch Umsetzung isocyanathaltiger Präpolymere mit Aminoalkylsilanen oder hydroxylgruppenhaltiger Polymere mit einem Reaktionsprodukt aus Polyisocyanaten und Aminoalkylsilan oder einem Isocyanatosilan hergestellt.

Thermisch vernetzbare Polyurethanzusammensetzungen nach dem Stand der Technik sind Mischungen aus hydroxylgruppenterminierten Polymeren und bei Raumtemperatur festen, extern oder intern blockierten Polyisocyanaten als Vernetzer. Der Nachteil extern blockierter Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft und Wiedergewinnung des Blockierungsmittels getroffen werden. Intern blockierte Systeme erfordern hohe Härtungstemperaturen von in der Regel mindestens 180°C.

Die WO 2006/010408 beschreibt Zwei-Komponenten-Bindemittel bestehend aus einer isocyanathaltigen, mindestens zwei cyclische Carbonatgruppen tragenden Verbindung A und einer mindestens zwei Aminogruppen tragenden Verbindung B. In der US 2005/0215702 wird der Einsatz von Urethandiolen, die durch Reaktion von cyclischen Carbonaten mit Aminoalkoholen zugänglich sind, als Additive in feuchtigkeitshärtenden Polyurethanklebstoffen beschrieben. Offenbart werden bevorzugt lösemittelhaltige Formulierungen. Lösungsmittelbasierte System besitzen eine Reihe von Nachteilen: Bei der Handhabung muss die Flüchtigkeit und die daraus entstehenden Emissionen beachtet werden, die eine gesundheitsschädliche Wirkung haben können. Zudem muss das Lösemittel in einem zusätzlichen Trocknungsschritt abgedampft werden. Die ist ein genereller Nachteil gegenüber Schmelzklebstoffen, bei denen ein Trocknungsschritt zum Abdampfen von Lösungsmitteln entfallen kann. So erfüllen Schmelzklebstoffe in der Regel die Anforderungen an niedrige Emissionswerte. Beim Abkühlen verfestigen sie sich wieder und sorgen so bereits nach kurzer Zeit für eine feste Klebbindung mit hoher Handhabungsfestigkeit.

Gemäß dem Stand der Technik erfolgt die Ausstattung des Polymeren mit mindestens zwei cyclischen Carbonatgruppen in der Regel durch nachträgliche Funktionalisierung eines bereits hergestellten Polymeren. Üblich ist hierbei die Addition von cyclischen Hydroxyalkylcarbonaten an Anhydridgruppen- oder Isocyanatgruppen-tragende Polymere. Diese Verfahren führen zu Nebenreaktionen und einer breiten Molgewichtsverteilung, die sich nachteilig auf die Viskosität auswirkt.

Aufgabe der vorliegenden Erfindung ist daher die Bereitstellung von reaktiven Polyurethanzusammensetzungen mit guten Haftungseigenschaften und Klebfestigkeiten, die bevorzugt aus der Schmelze aufgetragen werden und ohne Isocyanatkomponenten auskommen.

Diese Aufgabe wird erfindungsgemäß durch Polyurethanzusammensetzungen auf Basis isocyanatfreier Polymere gelöst.

Demgemäß sind ein erster Gegenstand der vorliegenden Erfindung isocyanatfreie Polyurethanzusammensetzungen umfassend cyclische Carbonatgruppen tragende Polymere (A), die keine Isocyanate enthalten oder darauf basieren, erhalten durch Umsetzung von Carboxylgruppen-tragenden Polymeren ausgewählt aus der Gruppe umfassend Polyester auf Basis von Di-oder Polyolen und Di- oder Polycarbonsäuren bzw. deren Derivaten oder Poly(meth)acrylate mit Hydroxylgruppen-funktionalisierten fünfgliedrigen cyclischen Carbonaten, und einen Härter (B) mit mindestens einer Aminogruppe und mindestens einer weiteren funktionellen Gruppe, mit der Maßgabe, dass die weitere funktionelle Gruppe keine Isocyanatgruppe ist. Bei den erfindungsgemäßen isocyanatfreien Polyurethanzusammensetzungen handelt es sich vorzugsweise um Klebstoffe, insbesondere um Schmelzklebstoffe, wobei einkomponentige thermisch vernetzbare und zweikomponentige isocyanatfreie Polyurethanschmelzklebstoffe wiederum bevorzugt sind

Demgemäß beschreibt die vorliegende Erfindung isocyanatfreie Bindemittel für Kleb-, Dicht- und Beschichtungsmittel, insbesondere auf Polyurethanbasis. Die Funktionalisierung des polymeren Bindemittels mit der vernetzbaren Gruppe erfolgt dabei nicht über Isocyanatgruppen, sondern über cyclische Carbonatgruppen. Demzufolge wird ein Polymer, das mindestens eine cyclische fünfgliedrige Carbonatgruppe trägt, mit funktionalisierten Aminen umgesetzt und so das härtbare polymere Bindemittel erhalten. Das funktionalisierte Amin muss mindestens eine Aminogruppe tragen, wobei primäre Aminogruppen bevorzugt sind.

Die erfindungsgemäßen Polyurethanzusammensetzngen haben den Vorteil, dass sie gänzlich ohne den Einsatz von Isocyanaten auskommen. Bei der Aushärtung bilden sich die Urethangruppen nicht durch die Reaktion von Alkoholen mit Isocyanaten, sondern aus cyclischen Carbonatgruppen mit Aminen. Durch den Angriff der Aminogruppe am Carbonylkohlenstoff öffnet sich der Carbonatring und es entsteht eine Hydroxyurethangruppe. Die Reaktionsgeschwindigkeit ist vor allem von der Reaktionstemperatur und der Struktur des Amins abhängig und kann durch Katalysatoren beschleunigt werden. Dabei zeichnen sich die erfindungsgemäßen Klebstoffe dadurch aus, dass sie durch gut kontrollierbare, externe Einflussfaktoren wie beispielsweise Luftfeuchtigkeit, eine Temperaturerhöhung oder Strahlungsquellen aushärten. Isocyanatfreie reaktive Polyurethanzusammensetzungen, insbesondere Schmelzklebstoffe, die ohne Isocyanate in der Synthese auskommen, wurden bisher im Stand der Technik nicht beschrieben. Darüber hinaus basieren die erfindungsgemäßen Polyurethanzusammensetzungen auch nicht auf Epoxidhaltigen Systemen oder Vorstufen, die vielfach bei deren Herstellung, z.B. unter Einsatz von Epichlorhydrin, unerwünschte Nebenprodukte wie beispielsweise Halogene freisetzen.

Die erfindungsgemäßen Polyurethanzusammensetzungen eignen sich sowohl für den Einsatz in einkomponentigen als auch in zweikomponentigen Systemen.

Bei einkomponentigen Polyurethanzusammensetzungen, insbesondere Klebstoffen, erfolgt die Herstellung der Mischung zeitlich unabhängig vom Klebstoffauftrag, insbesondere zu einem deutlich früheren Zeitpunkt. Nach dem Auftrag des erfindungsgemäßen Polyurethanklebstoffs erfolgt die Härtung beispielsweise durch thermisch induzierte Reaktion der im Klebstoff enthaltenen Reaktionspartner.

Bei den zweikomponentigen Klebstoffen wird die Mischung unmittelbar vor Klebstoffauftrag hergestellt. Sie eignen sich insbesondere zur Herstellung von hochverzweigten Klebstoffen für strukturelle Verklebungen.

Bei den erfindungsgemäß eingesetzten cyclische Carbonatgruppen tragenden Polymeren (A)handelt es sich um Polyester auf Basis von Di-oder Polyolen und Di- oder Polycarbonsäuren bzw. deren Derivaten oder Poly(meth)acrylate , die cyclische Carbonatgruppen als Endgruppen oder in der Seitenkette tragen. Es kann sich auch um Mischungen mehrerer unterschiedlicher Carbonatgruppen-tragender Polyester auf Basis von Di-oder Polyolen und Di- oder Polycarbonsäuren bzw. deren Derivaten oder/und Poly(meth)acrylate in jedem Mischungsverhältnis handeln. Das cyclische Carbonatgruppen tragende Polymer trägt mindestens eine, bevorzugt zwei cyclische fünfgliedrige Carbonatgruppen.

Derartige Polymere werden im Rahmen der vorliegenden Erfindung durch Umsetzung von Carboxylgruppen-tragenden Polyestern auf Basis von Di-oder Polyolen und Di- oder Polycarbonsäuren bzw. deren Derivaten, oder Poly(meth)acrylaten mit Hydroxylgruppen-funktionalisierten fünfgliedrigen cyclischen Carbonaten erhalten, vorzugsweise unter Ausschluss des Zusatzes von Isocyanaten.

Entsprechende Poly(meth)acrylate, das heißt Polyacrylate bzw. Polymethacrylate, können beispielsweise durch freie oder kontrollierte radikalische Polymerisation von Acrylaten oder Methacrylaten synthetisiert werden, wobei mindestens eines der genannten Comonomere eine Carboxyfunktionalität besitzt. Hierbei kann es sich beispielsweise um Acrylsäure oder Methacrylsäure handeln.

Besonders bevorzugt handelt es sich bei den Carboxylgruppen-tragenden Polymeren um Polyester auf Basis von Di-oder Polyolen und Di- oder Polycarbonsäuren bzw. deren Derivaten, die wiederum vorzugsweise durch Schmelzekondensation von Di-oder Polyolen und Di- oder Polycarbonsäuren bzw. deren Derivaten synthetisiert werden.

Im Hinblick auf die Di- oder Polyole und Di- oder Polycarbonsäuren gibt es grundsätzlich keine Einschränkungen und es können grundsätzlich alle Mischungsverhältnisse auftreten. Die Auswahl richtet sich nach den gewünschten physikalischen Eigenschaften des Polyesters. Diese können bei Raumtemperatur fest und amorph, flüssig und amorph oder/und (teil-)kristallin sein.

Als Di- oder Polycarbonsäuren können sämtliche dem Fachmann bekannten organischen Säuren mit zwei oder mehr enthaltenen Carboxyfunktionalitäten eingesetzt werden. Unter Carboxyfunktionalitäten werden im Sinne der vorliegenden Erfindung auch deren Derivate, beispielsweise Ester oder Anhydride, verstanden.

Bei den Di- oder Polycarbonsäuren kann es sich insbesondere um aromatische oder um gesättigte oder ungesättigte aliphatische oder gesättigte oder ungesättigte cycloaliphatische Di- oder Polycarbonsäuren handeln. Bevorzugt werden bifunktionelle Dicarbonsäuren eingesetzt.

Beispiele für geeignete aromatische Di- oder Polycarbonsäuren und deren Derivate sind Verbindungen wie Dimethylterephthalat, Terephthalsäure, Isophthalsäure, Naphthalindicarbonsäure und Phthalsäureanhydrid.

Beispiele linearer aliphatischer Di- oder Polycarbonsäuren umfassen Oxalsäure, Dimethyloxalat, Malonsäure, Dimethylmalonat, Bernsteinsäure, Dimethylsuccinat, Glutarsäure, Dimethylglutarat, 3,3-Dimethylglutarsäure, Adipinsäure, Adipinsäuredimethylester, Pimelinsäure , Korksäure, Azelainsäure, Dimethylazelat, Sebacinsäure, Dimethylsebacat, Undecandicarbonsäure, 1,10-Decandicarbonsäure, 1,12 - Dodecandicarbonsäure, Brassylsäure, 1,14-Tetradecandicarbonsäure, 1,16- Hexadecandisäure, 1,18- Octadecandisäure, Dimerfettsäuren und Mischungen daraus. Beispiele ungesättigter linearer Di- und/oder Polycarbonsäuren umfassen Itaconsäure, Fumarsäure, Maleinsäure oder Maleinsäureanhydrid.

Beispiele gesättigter cycloaliphatischer Di- und/oder Polycarbonsäuren umfassen Derivate von 1 ,4-Cyclohexandicarbonsäuren, 1, 3-Cyclohexandicarbonsäuren und 1,2-Cyclohexandicarbonsäuren.

Die Art der für die Herstellung der Polyester eingesetzten Diole oder Polyole ist an sich beliebig.

Unter Polyolen sind Verbindungen zu verstehen, die bevorzugt mehr als zwei Hydroxylgruppen tragen. So können lineare oder verzweigte aliphatische und/oder cycloaliphatische und/oder aromatische Diole oder Polyole enthalten sein.

Beispiele für geeignete Diole oder Polyole sind Ethylenglykol, Propandiol-1,2, Propandiol-1,3, Butandiol-1,4, Butandiol-1,3, Butandiol-1,2, Butandiol-2,3, Pentandiol-1,5, Hexandiol-1,6, Octandiol-1,8, Nonandiol-1,9, Dodecandiol-1,12, Neopentylglykol, Butylethylpropandiol-1,3, Methylpropandiol-1,3, Methylpentandiole, Cyclohexandimethanole, Tricylclo-[2.2.1]-decandimethanol, Isomere des Limonendimethanols, Isosorbit, Trimethylolpropan, Glycerin, 1,2,6-Hexantriol, Pentaerythrol und Mischungen daraus.

Unter aromatischen Diolen oder Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Diole oder Polyole können auch Etherdiole, d. h. Oligomere bzw. Polymere, z. B. auf Basis Ethylenglykol, Propylenglykol oder Butandiol-1,4 enthalten sein.

Bevorzugt werden bifunktionelle Diole und Dicarbonsäuren eingesetzt.

Auch Polyole oder Polycarbonsäuren mit mehr als zwei funktionellen Gruppen, wie beispielsweise Trimellitsäureanhydrid, Trimethylolpropan, Pentaerythrol oder Glycerin können eingesetzt werden. Außerdem können Lactone und Hydroxycarbonsäuren als Bestandteile des Polyesters verwendet werden.

Der Erweichungspunkt der bei der Umsetzung mit Hydroxylgruppen-funktionalisierten fünfgliedrigen cyclischen Carbonaten eingesetzten Carboxylgruppen-tragenden Polymere liegt vorzugsweise bei $\leq$ 170°C, bevorzugt $\leq$ 150°C. Die Polymere sind bei $\leq$ 200°C für mindestens 24 Stunden unter Inertbedingungen stabil, das heißt sie zeigen keine signifikante Änderung der Eigenschaften oder einen Anstieg der Farbzahl.

Wesentlich ist, dass die bei der Umsetzung mit Hydroxylgruppen-funktionalisierten fünfgliedrigen cyclischen Carbonaten eingesetzten Carboxylgruppen-tragenden Polymere eine ausreichende Anzahl von Carboxylgruppen tragen. Somit liegt die Konzentration an Säureendgruppen, bestimmt nach DIN EN ISO 2114, insbesondere zwischen 1 und 200 mg KOH/g, bevorzugt jedoch bei 10 bis 100 mg KOH/g und ganz besonders bevorzugt bei 20 bis 60 mg KOH/g.

Die Konzentration an Hydroxylendgruppen, titrimetrisch nach DIN 53240-2 bestimmt, ist beliebig und liegt in der Regel zwischen 0 und 200 mg KOH/g, vorzugsweise zwischen 0 und 10 mg KOH/g.

In der einfachsten Ausführungsform werden die Carboxylgruppen-tragenden Polymere mit Hydroxylgruppen-funktionalisierten fünfgliedrigen cyclischen Carbonaten, vorzugsweise Glycerincarbonat, vorzugsweise in Anwesenheit eines Katalysators, umgesetzt.

In einer weiteren und bevorzugten Ausführungsform werden die Herstellung der Carboxylgruppen-tragenden Polymere und die Umsetzung mit Hydroxylgruppen-funktionalisierten fünfgliedrigen cyclischen Carbonaten, bevorzugt Glycerincarbonat, vorzugsweise in Anwesenheit eines Katalysators, miteinander kombiniert, so dass ein zweistufiges Verfahren erhalten wird. Demgemäß werden in der bevorzugten Variante in einem ersten Reaktionsschritt die Carboxylgruppen-tragenden Polymere durch Polykondensation bzw. Polymerisation hergestellt, und die erhaltenen Carboxylgruppen-tragenden Polymere anschließend in einem zweiten Reaktionsschritt mit Hydroxylgruppen-funktionalisierten fünfgliedrigen cyclischen Carbonaten, bevorzugt Glycerincarbonat, vorzugsweise in Anwesenheit eines Katalysators, umgesetzt.

Die Herstellung der Carboxylgruppen-tragenden Polymere, insbesondere im Falle der bevorzugt eingesetzten Polyester, erfolgt im ersten Reaktionsschritt bevorzugt über eine Schmelzekondensation. Hierzu werden die vorab genannten Di- oder Polycarbonsäuren und Di-oder Polyole im molaren Verhältnis von Carboxy- zu Hydroxygruppen von 0,8 bis 1,5 zu 1, bevorzugt 1,0 bis 1,3 zu 1, eingesetzt. Ein Überschuss an Carboxylgruppen gegenüber Hydroxygruppen ist bevorzugt, um eine ausreichende Konzentration an Carboxylgruppen am Polyester zu erhalten.

Die Polykondensation erfolgt bei Temperaturen zwischen 150 und 280°C innerhalb von 3 bis 30 Stunden. Dabei wird zunächst ein Großteil der freiwerdenden Wassermenge bei Normaldruck abdestilliert. Im weiteren Verlauf wird das übrige Reaktionswasser sowie leicht flüchtige Diole abgespalten, bis das angestrebte Molekulargewicht erreicht ist. Gegebenenfalls kann dies durch verminderten Druck, eine Vergrößerung der Oberfläche oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitanverbindungen wie Tetrabutyltitanat. Denkbar sind auch Katalysatoren, die auf anderen Metallen wie z. B. Zinn, Zink oder Antimon basieren. Weiterhin sind weitere Additive und Fahrhilfsmittel wie Antioxidantien oder Farbstabilisatoren möglich.

Im zweiten Reaktionsschritt der bevorzugten Ausführungsform werden die erhaltenen Carboxylgruppen-tragenden Polymere mit Hydroxylgruppen-funktionalisierten fünfgliedrigen cyclischen Carbonaten, bevorzugt Glycerincarbonat, vorzugsweise in Anwesenheit eines Katalysators umgesetzt.

Beispiele geeigneter Hydroxylgruppen-funktionalisierter fünfgliedriger cyclischer Carbonate sind 4-Hydroxymethyl-1,3-dioxolan-2-on , 4-Hydroxyethyl-1,3-dioxolan-2-on, 4-Hydroxypropyl-1,3-dioxolan-2-on oder Zuckerderivate wie Methyl-3,4-O-Carbonyl-β-D-Galactopyranosid, wobei 4-Hydroxymethyl-1,3-dioxolan-2-on (Glycerincarbonat) insbesondere bevorzugt ist. Glycerincarbonat ist kommerziell verfügbar und wird aus Glycerinabfällen in der Biodieselproduktion gewonnen.

Die Umsetzung mit Glycerincarbonat erfolgt bei erhöhten Temperaturen, jedoch unterhalb der Zersetzungstemperatur des Glycerincarbonats. Bei Temperaturen oberhalb von 200°C beobachtet man einen Anstieg der Hydroxylgruppenkonzentration, vermutlich durch partielle Ringöffnung des Glycerincarbonats mit anschließender Decarboxylierung. Diese Nebenreaktion lässt sich durch einen Anstieg der Hydroxylzahl, titrimetrisch nach DIN 53240-2 bestimmt, verfolgen. Der Anstieg der Hydroxylzahl soll 0 bis maximal 100 mg KOH/g, vorzugsweise 0 bis maximal 50 mg KOH/g, insbesondere bevorzugt 0 bis maximal 20 mg KOH/g, und ganz besonders bevorzugt 0 bis maximal 10 mg KOH/g betragen.

Bevorzugt erfolgt die Reaktion daher bei 100 - 200 °C, besonders bevorzugt bei 140 bis 200 °C und ganz besonders bevorzugt bei Temperaturen um 180 °C. Das Carboxylgruppen-tragende Polymer liegt bei dieser Temperatur als Flüssigkeit oder als viskose Schmelze vor. Bevorzugt erfolgt die Synthese in Substanz ohne Zugabe von Lösemittel. Somit erfolgt das gesamte erfindungsgemäße Verfahren bevorzugt ohne die Zugabe von Lösemittel in der flüssigen Phase oder Schmelze.

Das Carboxylgruppen-tragende Polymer wird in einem geeigneten Reaktionsgefäß, beispielsweise einem Rührkessel, vorgelegt, auf die Reaktionstemperatur erhitzt und das Hydroxylgruppenfunktionalisierte fünfgliedrige cyclische Carbonat, bevorzugt Glycerincarbonat, sowie in der bevorzugten Ausführungsform der Katalysator, zugegeben. Das während der Reaktion entstehende Wasser wird über eine Destillationsvorrichtung kontinuierlich abgetrennt. Um die Wasserabtrennung zu erleichtern und das Gleichgewicht der Veresterungsreaktion auf die Seite des modifizierten Produkts hin zu verschieben wird der Kesselinnendruck während der Reaktion schrittweise von Normaldruck auf < 100 mbar, bevorzugt < 50 mbar und besonders bevorzugt < 20 mbar erniedrigt. Der Reaktionsverlauf wird über die Konzentration an freien Carboxylgruppen, gemessen über die Säurezahl, verfolgt. Die Reaktionszeit beträgt 2 bis 20 Stunden. Eine weitere Aufreinigung des Polymers ist in der Regel nicht erforderlich.

Die Menge an Glycerincarbonat richtet sich nach der Konzentration der Carboxylgruppen am Polymer. Bevorzugt wird stöchiometrisch oder mit einem leichten Überschuss an Glycerincarbonat gearbeitet. Ein geringerer Überschuss an Glycerincarbonat führt zu deutlich verlängerten Reaktionszeiten gegenüber höheren Überschüssen. Ist der Überschuss an Glycerincarbonat jedoch zu hoch gewählt, verbleibt nicht umgesetztes Glycerincarbonat im Produkt, das sich aus der Reaktionsmischung aufgrund des hohen Siedepunkts von Glycerincarbonat nur sehr schwer abtrennen lässt. Der Glycerincarbonatüberschuss liegt bei 0 - 50 mol-%, bevorzugt bei 0 - 10 mol% und ganz besonders bevorzugt bei 10 mol-% bezogen auf die molare Menge an freien Carboxylgruppen des Carboxylgruppen-tragenden Polymers.

Unter den beschriebenen Reaktionsbedingungen ist die Zugabe eines Katalysators bevorzugt, um eine ausreichende Reaktionsgeschwindigkeit zu erreichen. In Abwesenheit eines Katalysators wird in der Regel keine signifikante Verringerung der Carboxylgruppenkonzentration und nur eine langsame chemische Umsetzung beobachtet. Als Katalysator sind prinzipiell Substanzen geeignet, die als Lewissäuren wirken. Lewisbasen, wie beispielsweise tertiäre Amine, zeigen keine katalytische Reaktivität.

Allerdings neigen titanhaltige Lewissäuren, die häufig auch bei Schmelzekondensationen bei hohen Temperaturen eingesetzt werden, zu unerwarteten Nebenreaktionen. Es wurde gefunden, dass die Zugabe von Titansalzen und Titanorganylen als Katalysatoren zu einer deutlichen orangebraunen Verfärbung führt. Die katalytische Aktivität ist zudem vergleichsweise gering. Hingegen zeigen titanfreie Lewissäuren eine deutliche Beschleunigung der Reaktion und neigen gleichzeitig zu nur sehr geringen Verfärbungen. Es werden transparente bis gelbliche Schmelzen erhalten. Zu den bevorzugt eingesetzten titanfreien Lewissäuren zählen sowohl nichtmetallische Lewissäuren, wie beispielsweise p-Tolouolsulfonsäure oder Methylsulfonsäure, aber auch titanfreie metallische Lewissäuren, wie beispielsweise Zinksalze. Besonders bevorzugt werden zinnhaltige Lewissäuren als Katalysator eingesetzt Geeignete Zinnverbindungen sind beispielsweise Zinn(II)octoat oder, besonders bevorzugt, Monobutylzinnsäure. Die Menge an Katalysator beträgt bevorzugt 1 - 10 000 ppm, besonders bevorzugt 100 - 1000 ppm, bezogen auf die gesamte Reaktionsmischung. Es können auch Mischungen verschiedener Katalysatoren eingesetzt werden. Zudem ist es möglich die Katalysatormenge in mehreren Einzelportionen zuzugeben.

Bei der Durchführung des zweiten Reaktionsschritts können weitere Additive und Fahrhilfsmittel wie Antioxidantien oder Farbstabilisatoren zugegeben werden. Entsprechende Komponenten sind dem Fachmann bekannt.

Als Ergebnis des vorab beschriebenen Verfahrens werden Polymere erhalten, die fünfgliedrige cyclische Carbonatgruppen enthalten und die sich gut im Rahmen der vorliegenden Erfindung einsetzen lassen. Insbesondere bevorzugt handelt es sich bei den Polymeren um cyclische Carbonatgruppen enthaltende Polyester.

Die eingesetzten carbonatfunktionalisierten Polymere besitzen eine Säurezahl, bestimmt nach DIN EN ISO 2114, von ≤ 10 mg KOH/g, bevorzugt ≤ 5 mg KOH/g und besonders bevorzugt ≤ 2 mg KOH/g. Die Konzentration an Hydroxylendgruppen, titrimetrisch nach DIN 53240-2 bestimmt, liegt zwischen 0 und 100 mg KOH/g, vorzugsweise zwischen 0 und 20 mg KOH/g.

Die Funktionalität an cyclischen fünfgliedrigen Carbonatgruppen beträgt mindestens eins. Die Konzentration an polymergebundenen cyclischen Carbonatgruppen, beispielsweise bestimmt über NMR Spektroskopie beträgt 0,1 mmol/g bis 5 mmol/g, bevorzugt 0,3 mmol/g bis 1 mmol/g.

Die Carbonatgruppen-tragenden polymeren Bindemittel können bei Raumtemperatur fest oder flüssig sein. Der Erweichungspunkt des Polymers liegt bei - 100 °C bis + 200°C, bevorzugt zwischen -80 °C und + 150°C.

Bei dem Erweichungspunkt kann es sich sowohl um eine Glasübergangstemperatur als auch einen Schmelzpunkt handeln. Die Bestimmung der thermischen Eigenschaften erfolgt nach der DSC-Methode nach DIN 53765.

Ebenfalls Bestandteil der erfindungsgemäßen Polyurethanzusammensetzungen sind die Härter (B) mit mindestens einer Aminogruppe und mindestens einer weiteren funktionellen Gruppe, mit der Maßgabe, dass die weitere funktionelle Gruppe keine Isocyanatgruppe ist. Bei dem Härter handelt es sich um niedermolekulare oder polymere Substanzen, die mindestens eine Aminogruppe, bevorzugt eine primäre Aminogruppe, tragen. Zusätzlich zu der Aminofunktionalität weist Härter (B) mindestens eine weitere funktionelle Gruppe auf, mit der Maßgabe, dass die weitere funktionelle Gruppe keine Isocyanatgruppe ist. Die funktionelle Gruppe dient insbesondere der Vernetzung im reaktiven Klebstoff, Dichtstoff oder Beschichtungsmittel. Es darf sich dabei jedoch nicht um eine Isocyanatgruppe handeln. Im Rahmen der vorliegenden Erfindung sind mehrere und unterschiedliche funktionelle Gruppen in Verbindung (B) denkbar. Bevorzugt handelt es sich bei der weiteren funktionellen Gruppe um Amino-, Silyl-, Vinyl- oder Thiol-Gruppen.

In einer ersten Ausführungsform der vorliegenden Erfindung ist die funktionelle Gruppe von Härter (B) eine Silyl-Gruppe, vorzugsweise eine Alkoxysilyl-Gruppe. Auf diese Weise werden Bindemittel erhalten, die insbesondere als einkomponentige feuchtigkeitshärtende Schmelzklebstoffe eingesetzt werden können, da die Silyl-Gruppen bei Härtung ein Silannetzwerk ausbilden können. Im Falle dieser Ausführungsform werden als Verbindung (B) bevorzugt Aminoalkylsilane eingesetzt. Hierzu zählen beispielsweise 3-Aminopropylmethyldiethoxysilan, 3-Aminopropyltriethoxysilan (AMEO), 3-Aminopropyltrimethoxysilan (AMMO) und Tri-Aminofunktionelle Propyltrimethoxysilane (z. B. Dynasilan® TRIAMO von Evonik Industries AG). Die Reaktion von cyclischen fünfgliedrigen Carbonatgruppen mit Aminosilanen wird in der WO 2012/095293 beschrieben.

In einer weiteren Ausführungsform der vorliegenden Erfindung handelt es sich bei der funktionellen Gruppe von Härter (B) um blockierte Aminogruppen. Die Umsetzung der freien Aminogruppe mit der cyclischen Carbonatgruppe am Carbonatgruppen-tragenden Polymer erfolgt in diesem Fall nicht quantitativ sondern unterstöchiometrisch. Der Umsatz bezogen auf die cyclischen Carbonatgruppen am Polymer beträgt in dieser Ausführungsform insbesondere 10 - 90, bevorzugt 20 - 80 und besonders bevorzugt 40 - 60 %. Auf diese Weise wird sichergestellt, dass noch ausreichend freie cyclische Carbonatgruppen für die Vernetzung des Bindemittels zur Verfügung stehen. Im Gegensatz zu dem freien Amin reagiert die blockierte Aminogruppe nicht mit dem cyclischen Carbonatring, sondern steht nach dem Klebstoffauftrag für die Vernetzung zur Verfügung. Hierfür muss die blockierte Aminogruppe entschützt werden. Dies kann durch eine Temperaturerhöhung, eine externe Strahlungsquelle oder durch Feuchtigkeit ausgelöst werden. Beispiele hierfür sind Aminoaldimine oder Aminoketimine. Die Aldimin- bzw. Ketimingruppen bilden bei der Reaktion mit Wasser ein Aldehyd bzw. Keton und eine Aminogruppe, die mit den nicht umgesetzten cyclischen Carbonatgruppen vernetzen kann. Es handelt sich somit um latente Aminhärter, die erst in Gegenwart von Feuchtigkeit mit dem Carbonatgruppen-tragenden Polymer (A) reagieren.

In einer besonders bevorzugten Ausführungsform ist die weitere funktionelle Gruppe eine Aminogruppe, das heißt es werden insbesondere Verbindungen mit zwei Aminogruppen als Härter (B) eingesetzt.

Es handelt sich bei dem Härter (B) insbesondere um aliphatische oder cycloaliphatische Amine, bevorzugt sind aliphatische Amine, wobei entsprechende Diamine insbesondere bevorzugt sind. Aromatische Amine sind aufgrund ihrer toxikologischen Eigenschaften und geringen Reaktivität weniger erwünscht. In Bezug auf die Struktur der Amine gibt es sonst keine weiteren Einschränkungen. Es kann sich sowohl um lineare als auch verzweigte Strukturen handeln. In Bezug auf das Molekulargewicht gibt es ebenfalls keine Einschränkungen. Der Härter (B) wird daher bevorzugt aus der Gruppe der Alkylendiamine oder Cycloalkylendiamine ausgewählt.

Unter Alkylendiaminen sind Verbindungen der allgemeinen Formel $R^1R^2N$-Z-$NR^3R^4$ zu verstehen bei denen $R^1$, $R^2$, $R^3$, $R^4$ unabhängig voneinander H, Alkyl- oder Cycloalkylreste sein können. Z bedeutet eine lineare oder verzweigte gesättigte oder ungesättigte Alkylenkette mit mindestens 2 C-Atomen. Bevorzugte Beispiele sind Diaminoethan, Diaminopropan, 1,2-Diamino-2-methylpropan, 1,3-Diamino-2,2-dimethylpropan, Diaminobutan, Diaminopentan, 1,5-Diamino-2-methylpentan, Neopentyldiamin, Diaminohexan, 1,6-Diamino-2,2,4-trimethylhexan, 1,6-Diamino-2,4,4-trimethylhexan, Diaminoheptan, Diaminooctan, Diaminononan, Diaminodecan, Diaminoundecan. Diaminododecan, Dimeramin (kommerziell beispielsweise unter dem Handelsnamen Versamin 551 von der Fa. Cognis erhältlich), Triacetondiamin, Dioxadecandiamin, N,N-Bis(3-Aminopropyl)-dodecylamin (kommerziell beispielsweise unter dem Handelsnamen Lonzabac 12.30 von der Fa. Lonza erhältlich) oder Gemische daraus.

Unter Cycloalkylendiaminen sind Verbindungen der allgemeinen Formel $R^5R^6N$-Y-$NR^7R^8$ zu verstehen bei denen $R^5$, $R^6$, $R^7$, $R^8$ unabhängig voneinander H, Alkyl- oder Cycloalkylreste sein können. Y bedeutet einen gesättigten oder ungesättigten Cycloalkylrest mit mindestens 3 C-Atomen, vorzugsweise mindestens 4 C-Atomen. Bevorzugt sind Diaminocyclopentane, Diaminocyclohexane, Diaminocycloheptane, beispielsweise 1,4-Cyclohexandiamin, 4,4'-Methylenbiscyclohexylamin, 4,4'-Isopropylen-biscyclohexylamin, Isophorondiamin, m-Xylylendiamin, N-Aminoethylpiperazin oder Gemische daraus.

Die Diamine können auch sowohl Alkyl- als auch Cycloalkylreste gemeinsam enthalten. Bevorzugte Beispiele sind Aminoethylpiperazin, 1,8-Diamino-pmenthan, Isophorondiamin, 1,2-(Bisaminomethyl)-cyclohexan, 1,3-(Bisaminomethyl)-cyclohexan, 1,4-(Bisaminomethyl)-cyclohexan, Bis-(4- aminocyclohexyl)-methan.

Weitere Beispiele für als Härter (B) erfindungsgemäß einsetzbare Diamine sind Bis-(6-aminohexyl)-amin, $\alpha,\alpha$-Diaminoxylole, usw.

Besonders bevorzugt werden bifunktionelle aliphatische und cycloaliphatische Amine oder Polyetheramine eingesetzt, insbesondere Diaminoethan, Diaminobutan, Diaminohexan, Neopentyldiamin, 1,4-Cyclohexandiamin oder Isophorondiamin. Es sind jedoch auch Amine mit mehr als zwei Funktionalitäten möglich. Hierzu zählen beispielsweise Diethylentriamin, Triethylentetramin, Tetraethylenpentamin etc. Auch hochverzweigte Strukturen, wie beispielsweise Dendrimere, können eingesetzt werden. Ebenfalls bevorzugt sind aminfunktionaliserte Polymere, wie beispielsweise Polyethylenimine oder aminfunktionalisierte Polyalkylenglykole. Es können auch Mischungen unterschiedlicher aliphatischer oder cycloaliphatischer Amine eingesetzt werden.

Es sind auch Mischungen mehrerer unterschiedlicher Amine in jedem Mischungsverhältnis möglich.

Ganz besonders bevorzugt werden Diaminoethan, Diaminobutan, Diaminohexan, Isophorondiamin und Polyetheramine als Härter (B) eingesetzt

Das Verhältnis der funktionellen Gruppen der cyclische Carbonatgruppen tragenden Polymere (A und der Härter (B) wird so gewählt, dass sich ein stöchiometrisches Verhältnis von cyclischen Carbonatgruppen zu Aminen ergibt. Der Gewichtsanteil des cyclische Carbonatgruppen tragenden Polymeren (A) in dem isocyanatfreien Polyurethanklebstoff beträgt 1 - 99 %, bevorzugt 20 - 95 %, und besonders bevorzugt 50 - 90 %.

Optional kann den erfindungsgemäßen Polyurethanklebstoffen ein Katalysator zugesetzt werden. Hierbei handelt es sich bevorzugt um Metallsalze, die als Lewissäure oder Lewisbase wirken. Geeignete Katalysatoren sind beispielsweise Calcium- oder Magnesiumsalze. Auch Stickstoffverbindungen, zum Beispiel tertiäre Amine wie Triazabicyclo[4,4,0]dec-5-en, zeigen eine katalytische Aktivität. Es können auch Mischungen zum Einsatz kommen. Die Katalysatoren können homogen oder verkapselt in der Mischung vorliegen.

Bevorzugt werden Halogenide, Triflate, Acetate, Acetylacetonate, Citrate und Lactate von Hauptgruppenmetallen eingesetzt. Besonders bevorzugt ist Calciumbromid, Calciumtriflat und Zinkchlorid.

Zusätzlich können die erfindungsgemäßen isocyanatfreien Polyurethanklebstoffe die, in dem technischen Gebiet üblichen, Additive enthalten, die dem Fachmann hinlänglich bekannt sind. Bei den Additiven kann es sich beispielsweise um Rheologiemodifizierer, wie Aerosil®, nichtfunktionalisierte Polymere, z. B. thermoplastische Polyurethane (TPU) und/oder Polyacrylate und/oder Ethylen-Vinylacetatcopolymere (EVA); Pigmente bzw. Füllstoffe, z. B. Talkum, Siliciumdioxid, Titandioxid, Bariumsulfat, Calciumcarbonat, Ruß oder farbige Pigmente, externe Flammschutzmittel; Tackifier, wie. z. B. Kolophoniumharze, Kohlenwasserstoffharze, Phenolharze, Hydrolysestabilisatoren sowie Alterungsschutz- und Hilfsmittel handeln.

Ebenfalls Gegenstand der vorliegenden Erfindung ist die Verwendung der erfindungsgemäßen isocyanatfreien Polyurethanklebstoffe als einkomponentige oder zweikomponentige Kleb-, Dichtoder Beschichtungsstoffe.

Im Falle der erfindungsgemäßen Anwendung des erfindungsgemäßen Polyurethanklebstoffs als einkomponentiger Schmelzklebstoff bedeutet dies, dass das polymere Bindemittel (A) und Härter (B) sowie die weiteren optionalen Bestandteile vorab zusammen gebracht und vor dem Klebstoffauftrag für eine bestimmte Zeit gemeinsam bei Raumtemperatur gelagert werden können, ohne dass es zu einer Vernetzung des Klebstoffs kommen sollte.

Die Herstellung der erfindungsgemäßen isocyanatfreien Polyurethanklebstoffe erfolgt im einfachsten Fall durch Mischen der Einzelkomponenten in Schmelze. Das Mischen kann zum Beispiel in einem Rührbehälter, einem Kneter oder einem Extruder erfolgen. Es muss sichergestellt werden, dass alle Einzelkomponenten bei der Mischtemperatur entweder in flüssiger Phase vorliegen oder sich in der Schmelze dispergieren lassen. Die Aufschmelztemperatur richtet sich zudem nach der Viskosität der Bestandteile. Sie sollte unterhalb der Aushärtetemperatur liegen, üblicherweise in einem Bereich von 50 bis 200°C, bevorzugt bei 50 - 150°C. Sie wird so gewählt, dass es nicht zu einer Vernetzung kommt.

Die erfindungsgemäßen isocyanatfreien Polyurethanklebstoffe sind in der Regel bei Raumtemperatur lagerstabil. Das heißt, dass es zu keiner signifikanten Vernetzungsreaktion kommt. Der Grad der Vernetzung lässt sich beispielsweise über die Schmelzeviskosität verfolgen. Die Viskosität nach der Lagerung muss so gering sein, dass eine Benetzung des Substrats bei der eingestellten Auftragstemperatur möglich ist. Außerdem müssen noch genügend funktionelle Gruppen vorhanden sein, um eine Aushärtung in der Klebfuge zu gewährleisten.

Die erfindungsgemäßen isocyanatfreien Polyurethanklebstoffe werden bei einer Temperatur oberhalb des Erweichungspunkts aller Einzelkomponenten als Schmelze aufgetragen, bevorzugt bei 50 bis 200°C. Die Aushärtung erfolgt durch die Ringöffnung der cyclischen Carbonatgruppen mit den Aminogruppen des Härter (B), vorzugsweise den primären Aminogruppen. Gegebenenfalls wird in Abhängigkeit von der Auftragstemperatur und der Struktur des Amins mit Hilfe des Katalysators die Reaktion beschleunigt. Optional kann das Substrat vorgeheizt oder das gefügte Bauteil unter Fixierung auf einer Temperatur oberhalb der Raumtemperatur gehalten werden, um eine ausreichende Reaktionsdauer zu gewährleisten. Auch eine induktive Härtung ist möglich. Nach dem Abkühlen wird eine stabile Klebverbindung erhalten. Sie zeichnet sich durch eine für Polyurethanklebstoffe typische gute Haftung, hohe Endfestigkeit und hohe Dehnung aus.

Die Adhäsion ist über die verwendeten cyclische Carbonatgruppen tragenden Polymere für ein breites Spektrum an Substraten einstellbar. Mögliche, beispielhaft genannte Substrate sind Metalle, wie z. B. Stahl oder Aluminium, Kunststoffe, wie beispielsweise Polyamid, Polycarbonat, Polyethylenterephthalat oder ABS, insbesondere faserverstärkte Kunststoffe (FRPs) wie carbonfaser- oder glasfaserverstärkte Polyester oder Epoxide (CFK und GFK) und Sheet Moulding Compounds (SMC) sowie Holz, Glas, Glaskeramik, Beton, Mörtel, Ziegel, Steine, Papier, Textilien, Schaumstoffe.

Bezüglich der Anwendung des erfindungsgemäßen Schmelzklebstoffs gibt es grundsätzlich keine Einschränkungen.

Insbesondere handelt sich bei den Verklebungen um Verklebungen im Automobil- und Transportbereich, in der Bauindustrie, in der holzverarbeitenden Industrie, graphischen Industrie und in der Textilindustrie.

Besonders bevorzugt ist eine Vorbeschichtung des Schmelzklebstoffs auf einem der Substrate. Hierfür wird die Formulierung kurzzeitig aufgeschmolzen und auf das Substrat appliziert. Dies muss so schnell erfolgen, dass die thermische Belastung gering ist und es zu keiner signifikanten Vernetzungsreaktion kommt und noch genügend funktionelle Gruppen für die spätere Aushärtung zur Verfügung stehen. Das vorbeschichtete Substrat wird zügig auf Raumtemperatur abgekühlt und kann bei diesen Temperaturen lagerstabil sein. Für die eigentliche Verklebung wird der vorbeschichtete Klebstoff durch Wärmeeintrag reaktiviert und mit dem zweiten Substrat verklebt. Der Vorteil dieses Verfahrens ist eine räumliche und zeitliche Trennung von Klebstoffauftrag und Verklebung. Dies führt zu einer deutlichen Vereinfachung des Fügeprozesses. Bevorzugt handelt es sich bei dem vorbeschichteten Substrat um eine Papier- oder Kunststofffolie, die zur Kaschierung von großflächigen Bauteilen, z. B. in der Möbelherstellung oder im Innenbereich von Fahrzeugen, der Profilummantelung und der Kantenanleimung eingesetzt wird.

In einer besonderen Ausführungsform wird der erfindungsgemäße isocyanatfreie Polyurethanklebstoff als Klebstofffolie ausgetragen oder auf eine Trägerfolie aufgebracht, die vor Herstellung der Verklebung entfernt wird.

In einer weiteren Ausführungsform wird der erfindungsgemäße isocyanatfreie Polyurethanklebstoff vermahlen und zur Herstellung der Verklebung in Pulverform appliziert.

In einer weiteren bevorzugten Ausführungsform werden die erfindungsgemäßen isocyanatfreien Polyurethanklebstoffe in Form von zweikomponentigen Polyurethanklebstoffen eingesetzt. Dies bedeutet, dass das Carbonatgruppen-tragende polymere Bindemittel (A) und der Härter (B) getrennt voneinander gelagert und aufgeschmolzen werden. Erst unmittelbar vor dem Klebstoffauftrag werden beide Komponenten als Schmelze miteinander gemischt. Die resultierende Klebstoffformulierung wird ohne weitere Lagerung direkt auf eines der zu verklebenden Substrate aufgetragen und innerhalb der offenen Zeit mit einem zweiten Substrat durch kurzes Anpressen verklebt.

Das Mischungsverhältnis wird so gewählt, dass sich ein stöchiometrisches Verhältnis zwischen cyclischen Carbonatgruppen und Aminogruppen ergibt. Das Mischungsverhältnis und damit das Carbonat/Amin-Verhältnis liegt bevorzugt zwischen 1,0 : 0,8 bis 1,0 : 3,0, besonders bevorzugt zwischen 1,0 : 1,0 bis und 1,0 : 1,5 und ganz besonders bevorzugt bei 1 : 1.

Die Vermischung kann dynamisch oder statisch erfolgen. Bevorzugt werden die beiden Komponenten aus beheizbaren Kartuschen mit Hilfe einer manuellen oder pneumatischen Pistole und einem statischen Mischer verarbeitet. Die beiden Komponenten können auch in größere Gebinde wie Fässer oder Hobbocks abgefüllt werden und vor Verarbeitung in geeigneten Aufschmelzanlagen, beispielsweise mit beheizbaren Fassschmelzanlagen, aufgeschmolzen und mit Pumpanlagen dosiert und gemischt werden.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

**Beispiele:**

Polvesterbeispiel P1:

Die Herstellung des erfindungsgemäßen isocyanatfreien carbonatgruppentragenden Polyesters P 1 erfolgt gemäß der EP 15153944.2-1301. In der ersten Stufe wird ein carboxylterminierter Polyester aus 648 g Adipinsäure und 515 g 1,6-Hexandiol in Gegenwart von 0,5 g Monobutylzinnsäure hergestellt. Die Säurezahl (SZ) beträgt 11 mg KOH/g, die Hydroxylzahl 0,9 mg KOH/g. In der zweiten Stufe erfolgt die Reaktion mit 27,8 g Glycerincarbonat.

Der bifunktionelle Polyester P 1 weist ein Molgewicht von 10460 g/mol, ein Äquivalentgewicht von 5230 g/mol, eine Säurezahl von 0,8 mg KOH/g, gemessen nach der DIN EN ISO 22154 und eine Hydroxylzahl von 6,2 mg KOH/g, gemessen nach der DIN 53240-2, auf. Der Erweichungspunkt, gemessen als Schmelzpunkt DSC nach der DIN 53765, liegt bei 55°C. Die Viskosität, gemessen nach der DIN EN ISO 3219, beträgt bei 80°C 27,8 Pas und bei 130°C 5,8 Pas.

Das Molgewicht wird gemäß der folgenden Gleichung berechnet.

$$Molgewicht\ P\ in\ \frac{g}{mol} = \frac{56106\ \frac{mg\ KOH}{g}}{SZ\ 1.Stufe} + 128\frac{g}{mol} * Funktionalität$$

Polvesterbeispiel P2

In der ersten Stufe wird analog zu Beispiel 1 ein carboxylterminierter Polyester aus 664 g Adipinsäure und 508 g 1,6-Hexandiol hergestellt. Die Säurezahl beträgt 29 mg KOH/g, die Hydroxylzahl 0,9 mg KOH/g. In der zweiten Stufe erfolgt die Umsetzung mit 66,5 g Glycerincarbonat in Gegenwart von 0,5 g Monobutylzinnsäure.

Der bifunktionelle Polyester P 2 weist ein Molgewicht von 4120 g/mol, ein Carbonat-Äquivalentgewicht von 2060 g/mol, eine Säurezahl von 1,6 mg KOH/g, gemessen nach der DIN EN ISO 22154 und eine Hydroxylzahl von 5,9 mg KOH/g, gemessen nach der DIN 53240-2, auf. Der Erweichungspunkt, gemessen als Schmelzpunkt DSC nach der DIN 53765, liegt bei 52°C. Die Viskosität, gemessen nach der DIN EN ISO 3219, beträgt bei 80°C 4 Pas.

Polvesterbeispiel P3

In der ersten Stufe wird analog zu Beispiel 1 ein carboxylterminierter Polyester aus 678 g Adipinsäure, 467 g 1,6-Hexandiol und 31,6 g Trimethylolpropan hergestellt. Die Säurezahl beträgt 44 mg KOH/g, die Hydroxylzahl 2,0 mg KOH/g. In der zweiten Stufe erfolgt die Umsetzung mit 111 g Glycerincarbonat in Gegenwart von 0,6 g Monobutylzinnsäure.

Der Polyester P 3 weist ein Molgewicht von 4070 g/mol, ein Carbonat-Äquivalentgewicht von 1400 g/mol, eine Säurezahl von 0,4 mg KOH/g, gemessen nach der DIN EN ISO 22154 und eine Hydroxylzahl von 16 mg KOH/g, gemessen nach der DIN 53240-2, auf. Die Funktionalität ist 2,9. Die Viskosität, gemessen nach der DIN EN ISO 3219, beträgt bei 80°C 12 Pas.

Klebstoffbeispiel K1:

Herstellung eines Klebstoffs K1

In einem 500 ml Planschliffkolben werden 200 g des Polyesters P1 aufgeschmolzen. Bei einer Temperatur von 80 °C werden 2,2 g des Härters Diaminohexan, das entspricht einem Carbonat/ Amin-Verhältnis von 1:1, zugegeben und zügig homogenisiert. Zur vollständigen Umsetzung der Reaktionspartner wird bei 80 °C weitergerührt. Der Reaktionsumsatz wird anhand des Verlaufs der Aminzahl, gemessen nach der DIN 53176, verfolgt.

Nach 4 Stunden ist die Aminzahl auf 1,4 mg KOH/g gefallen und die Reaktion ist beendet. Der Klebstoff wird abgefüllt.

Der Klebstoff K1 weist eine Viskosität, gemessen nach der DIN EN ISO 3219 bei 80°C von 193 Pas und bei 130°C von 22 Pas auf. Die Klebfestigkeit auf Holz, gemessen als Zugscherfestigkeit nach der DIN EN 1465, beträgt 2 N/mm$^2$.

Klebstoffbeispiel K2

Herstellung eines Klebstoffs K2

In einem 500 ml Planschliffkolben werden 200 g des Polyesters P2 aufgeschmolzen. Bei einer Temperatur von 130 °C werden 5,8 g des Härters Diaminohexan, das entspricht einem Carbonat/ Amin-Verhältnis von 1:1, zugegeben und zügig homogenisiert. Zur vollständigen Umsetzung der Reaktionspartner wird bei 130 °C weitergerührt. Der Reaktionsumsatz wird anhand des Verlaufs der Aminzahl, gemessen nach der DIN 53176, verfolgt.

Nach 2 Stunden ist die Aminzahl auf 0,3 mg KOH/g gefallen und die Reaktion ist beendet. Der Klebstoff wird abgefüllt.

Der Klebstoff K2 weist eine Viskosität, gemessen nach der DIN EN ISO 3219 bei 130°C von 10,9 Pas auf.

Klebstoffbeispiel K3

In einem 500 ml Planschliffkolben werden 120 g des Polyesters P2 und 30 g des Polyesters P3 aufgeschmolzen. Bei einer Temperatur von 80 °C werden 4,7 g des Härters Diaminohexan zugegeben, das entspricht einem Carbonat/ Amin-Verhältnis von 1:1. Die Mischung wird bei 80°C zehn Minuten homogenisiert und anschließend abgefüllt.

Die Klebfestigkeit auf Holz, gemessen nach der DIN EN 1465, beträgt 0,4 N/mm$^2$. Nach 1 h Härtung bei 140°C steigt die Klebfestigkeit auf 4,2 N/mm$^2$ an.

Klebstoffbeispiel K4

In einer 250 ml Glasflasche werden 140 g des Polyesters P3 aufgeschmolzen. Bei einer Temperatur von 85 °C werden 3 g des Härters Diaminoethan zugegeben, das entspricht einem Carbonat/ Amin-Verhältnis von 1:1. Die Mischung wird eine Minute mit einem Dissolver bei 2000 Umdrehungen pro Minute homogenisiert und anschließend charakterisiert.

Zur Bestimmung des Erweichungspunkt (Ring und Kugel) gemäß DIN ISO 4624 wird die Klebstoffschmelze in zwei Ringe gegossen und abgekühlt. Nach 10 minütiger Lagerung bei Raumtemperatur wird ein Erweichungspunkt von 59 °C bestimmt. Nach einstündiger Lagerung ist der Klebstoff vernetzt und schmilzt nicht mehr vollständig auf.

Direkt nach Herstellung des Klebstoffs wird mittels einer Kastenrakel ein 0,5 mm dicker Film auf Silikonpapier aufgezogen. Nach dem Erkalten der Schmelze werden Prüfstäbe ausgestanzt und bei 20°C gelagert. Nach einer Stunde beträgt die Zugfestigkeit gemäß DIN 53504 3,6 MPa. Nach 24 Stunden ist die Zugfestigkeit auf 5,5 MPa angestiegen.

Klebstoffbeispiel K5:

Eine Mischung bestehend aus 5 g des Polyesters P1 und 0,3 g Diaminohexan (HMDA) wird unter Rühren aufgeschmolzen und bei 120 °C gerührt. Dabei entsteht eine zähflüssige klare Schmelze. Bereits nach 15 Minuten Umsatzzeit wird ein deutlicher Anstieg in der Viskosität festgestellt, welche auf den Beginn der Reaktion zwischen dem Carbonat terminiertem Polyester und dem Diamin hinweist. Nach einer Stunde und zwei Stunden Reaktionszeit bei 120 °C werden ca. 1 g Proben entnommen und in Chloroform gelöst. Zur Entfernung von evtl. nicht umgesetzten HMDA wurde die Probe mit ca. 1 g fein gemörsertem Kaliumhydrogensulfat versetzt und als Suspension 15 Minuten gerührt. Nach der Filtration wurde Chloroform am Rotationsverdampfer entfernt und das feste Produkt mittels NMR-Analytik untersucht (CDCl$_3$ und DMSO-d$_6$).

Das $^1$H-NMR Spektrum zeigte vollständigen Umsatz der Carbonatendgruppen. Eine weitere Veränderung des

$^1$H-NMR Spektrums nach zwei Stunden Reaktionszeit war nicht sichtbar. Zur vollständigen Charakterisierung der Reaktion, bzw. zum Nachweis der Bildung des Hydroxyurethans wurden weitere Untersuchungen mittels $^{13}$C-NMR Spektroskopie, IR-Spektroskopie sowie eine Elementaranalyse durchgeführt. Alle Methoden bestätigen die Bildung des entsprechenden Polyurethans. Darüber hinaus zeigt sich der Molekulargewichtsaufbau mittels Gelpermeationschromatographie. (GPC). Eine weitere Zunahme des Molekulargewichts der Proben nach einer Stunde und zwei Stunden konnte nicht festgestellt werden.

**Patentansprüche**

1. Isocyanatfreie Polyurethanzusammensetzungen umfassend cyclische Carbonatgruppen tragende Polymere (A), die keine Isocyanate enthalten oder darauf basieren, erhalten durch Umsetzung von Carboxylgruppen-tragenden Polymeren ausgewählt aus der Gruppe umfassend Polyester auf Basis von Di-oder Polyolen und Di- oder Polycarbonsäuren bzw. deren Derivaten oder Poly(meth)acrylate, mit Hydroxylgruppen-funktionalisierten fünfgliedrigen cyclischen Carbonaten, und einen Härter (B) mit mindestens einer Aminogruppe und mindestens einer weiteren funktionellen Gruppe, mit der Maßgabe, dass die weitere funktionelle Gruppe keine Isocyanatgruppe ist.

2. Isocyanatfreie Polyurethanzusammensetzungen gemäß Anspruch 1, **dadurch gekennzeichnet, dass** es sich bei den Carboxylgruppen-tragenden Polymeren um Polyester auf Basis von Di-oder Polyolen und Di- oder Polycarbonsäuren bzw. deren Derivaten handelt.

3. Isocyanatfreie Polyurethanzusammensetzungen gemäß Anspruch 1 oder 2, **dadurch gekennzeichnet, dass** es sich bei den Aminogruppen des Härter (B) um primäre Aminogruppen handelt.

4. Isocyanatfreie Polyurethanzusammensetzungen gemäß einem oder mehreren der Ansprüche 1 bis 3, **dadurch gekennzeichnet, dass** es sich bei der weiteren funktionellen Gruppe um Amino-. Silyl-, Vinyl- oder Thiol-Gruppen handelt.

5. Isocyanatfreie Polyurethanzusammensetzungen gemäß einem oder mehreren der Ansprüche 1 bis 3, **dadurch gekennzeichnet, dass** es sich bei dem Härter (B) um aliphatische oder cycloaliphatische Amine handelt.

6. Isocyanatfreie Polyurethanzusammensetzungen gemäß einem oder mehreren der Ansprüche 1 bis 5, **dadurch gekennzeichnet, dass** der Gewichtsanteil des cyclische Carbonatgruppen tragenden Polymeren (A) in der isocyanatfreien Polyurethanzusammensetzung 1 - 99 % beträgt.

7. Isocyanatfreie Polyurethanzusammensetzungen gemäß einem oder mehreren der Ansprüche 1 bis 6, **dadurch gekennzeichnet, dass** den Polyurethanzusammensetzungen ein Katalysator zugesetzt wird.

8. Isocyanatfreie Polyurethanzusammensetzungen gemäß einem oder mehreren der Ansprüche 1 bis 7, **dadurch gekennzeichnet, dass** sie zusätzlich Additive enthalten.

9. Isocyanatfreie Polyurethanzusammensetzungen gemäß Anspruch 8, **dadurch gekennzeichnet, dass** es sich bei den Additiven um Rheologiemodifizierer, nichtfunktionalisierte Polymere, Pigmente bzw. Füllstoffe, externe Flammschutzmittel; Tackifier sowie Alterungsschutz- und Hilfsmittel handelt.

10. Verwendung der isocyanatfreien Polyurethanzusammensetzungen gemäß einem oder mehreren der Ansprüche 1 bis 9 als einkomponentige oder zweikomponentige Kleb-, Dichtoder Beschichtungsstoffe.

**Claims**

1. Isocyanate-free polyurethane compositions comprising polymers (A) carrying cyclic carbonate groups, which do not comprise or are not based on isocyanates, obtained by reaction of polymers carrying carboxyl groups, selected from the group comprising polyesters based on di- or polyols and di- or polycarboxylic acids or derivatives thereof or poly(meth)acrylates, with hydroxyl-functionalized five-membered cyclic carbonates, and a curing agent (B) having at least one amino group and at least one further functional group, with the proviso that the further functional group is not an isocyanate group.

2. Isocyanate-free polyurethane compositions according to Claim 1, **characterized in that** the polymers carrying carboxyl groups are polyesters based on di- or polyols and di- or polycarboxylic acids or derivatives thereof.

3. Isocyanate-free polyurethane compositions according to Claim 1 or 2, **characterized in that** the amino groups of the curing agent (B) are primary amino groups.

4. Isocyanate-free polyurethane compositions according to one or more of Claims 1 to 3, **characterized in that** the further functional group comprises amino, silyl, vinyl or thiol groups.

5. Isocyanate-free polyurethane compositions according to one or more of Claims 1 to 3, **characterized in that** the curing agent (B) comprises aliphatic or cycloaliphatic amines.

6. Isocyanate-free polyurethane compositions according to one or more of Claims 1 to 5, **characterized in that** the weight fraction of the polymer (A) carrying cyclic carbonate groups in the isocyanate-free polyurethane composition is 1 - 99%.

7. Isocyanate-free polyurethane compositions according to one or more of Claims 1 to 6, **characterized in that** a catalyst is added to the polyurethane compositions.

8. Isocyanate-free polyurethane compositions according to one or more of Claims 1 to 7, **characterized in that** they further comprise additives.

9. Isocyanate-free polyurethane compositions according to Claim 8, **characterized in that** the additives comprise rheology modifiers, unfunctionalized polymers, pigments and/or fillers, external flame retardants; tackifiers, and also ageing inhibitors and auxiliaries.

10. Use of the isocyanate-free polyurethane compositions according to one or more of Claims 1 to 9, as one-part or two-part adhesives, sealants or coating materials.

**Revendications**

1. Compositions de polyuréthane exemptes d'isocyanate comprenant des polymères (A) portant des groupes carbonate cycliques, qui ne contiennent aucun isocynate ou ne sont à base d'aucun isocyanate, obtenus par transformation de polymères portant des groupes carboxyle choisis dans le groupe comprenant des polyesters à base de diols ou de polyols et d'acides dicarboxyliques ou polycarboxyliques ou de leurs dérivés ou de poly(méth)acrylates, avec des carbonates cycliques à cinq chaînons fonctionnalisés par des groupes hydroxyle, et un agent de durcissement (B) comportant au moins un groupe amino et au moins un groupe fonctionnel supplémentaire, à condition que le groupe fonctionnel supplémentaire ne soit pas un groupe isocyanate.

2. Compositions de polyuréthane exemptes d'isocyanate selon la revendication 1, **caractérisées en ce que** les polymères portant des groupes carboxyle sont des polyesters à base de diols ou de polyols et d'acides dicarboxyliques ou polycarboxyliques ou de leurs dérivés.

3. Compositions de polyuréthane exemptes d'isocyanate selon la revendication 1 ou 2, **caractérisées en ce que** les groupes amino de l'agent de durcissement (B) sont des groupes amino primaire.

4. Compositions de polyuréthane exemptes d'isocyanate selon l'une ou plusieurs des revendications 1 à 3, **caractérisées en ce que** le groupe fonctionnel supplémentaire est un groupe amino, silyle, vinyle ou thiol.

5. Compositions de polyuréthane exemptes d'isocyanate selon l'une ou plusieurs des revendications 1 à 3, **caractérisées en ce que** l'agent de durcissement (B) est une amine aliphatique ou cycloaliphatique.

6. Compositions de polyuréthane exemptes d'isocyanate selon l'une ou plusieurs des revendications 1 à 5, **caractérisées en ce que** la proportion en poids du polymère (A) portant des groupes carbonate cycliques dans la composition de polyuréthane exempte d'isocyanate est de 1 à 99 %.

7. Compositions de polyuréthane exemptes d'isocyanate selon l'une ou plusieurs des revendications 1 à 6, **caracté-**

**risées en ce qu'**un catalyseur est ajouté aux compositions de polyuréthane.

8. Compositions de polyuréthane exemptes d'isocyanate selon l'une ou plusieurs des revendications 1 à 7, **caractérisées en ce qu'**elles contiennent de plus des additifs.

9. Compositions de polyuréthane exemptes d'isocyanate selon la revendication 8, **caractérisées en ce que** les additifs sont des agents de modification de la rhéologie, des polymères non fonctionnalisés, des pigments ou des charges, des agents ignifugeants externes ; des agents tackifiants ainsi que des agents anti-vieillissement et des auxiliaires.

10. Utilisation des compositions de polyuréthane exemptes d'isocyanate selon l'une ou plusieurs des revendications 1 à 9 en tant que matières adhésives, d'étanchéité ou de revêtement, à un composant ou à deux composants.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006010408 A
- US 20050215702 A
- WO 2012095293 A
- EP 1515394421301